# EUROPÄISCHE PATENTSCHRIFT

(11) **EP 2 129 938 B1**
(45) Veröffentlichungstag und Bekanntmachung des Hinweises auf die Patenterteilung: **28.08.2013**
(21) Anmeldenummer: 08715753.3
(22) Anmeldetag: 13.02.2008
(51) Int. Cl.: F16H 57/02

(54) **GETRIEBEGEHÄUSE**
TRANSMISSION HOUSING
CARTER DE BOÎTE DE VITESSES

(30) Priorität: 23.03.2007 DE 102007014707
(43) Veröffentlichungstag der Anmeldung: 09.12.2009
(73) Patentinhaber: SEW-EURODRIVE GmbH & Co. KG, 76646 Bruchsal (DE)
(72) Erfinder: BENDER, Josef, 76684 Östringen (DE); LEIBOLD, Hubert, 76694 Forst (DE); MORITZ, Thorsten, 76698 Ubstadt-Weiher (DE)
(74) Vertreter: Tüngler, Eberhard
(86) Internationale Anmeldenummer: PCT/EP2008/001101
(87) Internationale Veröffentlichungsnummer: WO 2008/116528

(56) Entgegenhaltungen:
- EP-A- 0 950 836
- WO-A-2004/057732
- WO-A-2006/105809
- DE-A1- 4 309 559
- DE-A1- 10 013 785
- DE-A1- 19 853 459
- FR-A- 1 003 402

## Beschreibung

Die Erfindung betrifft ein Getriebe, einen Baukasten und ein Verfahren.

Aus der DE 100 13 785 A1 ist ein zweistufiges Getriebe bekannt, wobei das Gehäuse nicht druckgussfähig ausgestaltet ist. Die Zentrierung der eintreibenden Ritzelwelle wird mittels des Bohrloches, das zur Bildung der Lageraufnahme bearbeitet wird, festgelegt.

**Aus der** WO 2006/105809A, die die Merkmale des Obergegriffs des Anspruchs 1 enthält, **ist ein Getriebe bekannt, das ein erstes Gehäuseteil umfasst, wobei am ersten Gehäuseteil ein Zentriermittel vorgesehen ist.**

Der Erfindung liegt daher die Aufgabe zugrunde, eine kostengünstige Herstellung bei einer Baureihe mit hoher Varianz zu ermöglichen.

Erfindungsgemäß wird die Aufgabe bei Getriebe nach den in Anspruch 1, bei dem Verfahren nach den in Anspruch 16 und bei dem Baukasten nach den in Anspruch 22 angegebenen Merkmalen gelöst.

Wichtige Merkmale der Erfindung bei dem Getriebe sind, dass es zumindest ein erstes Gehäuseteil umfasst, wobei das am ersten Gehäuseteil als erstes Zentriermittel ein unterbrochener Einpass vorgesehen ist, insbesondere zur Zentrierung des am ersten Gehäuseteil vorgesehenen weiteren Gehäuseteils,

wobei das erste Gehäuseteil derart gestaltet ist, dass es im Druckgussverfahren herstellbar ist. Von Vorteil ist dabei, dass die Herstellung kostengünstig ausführbar ist. **Außerdem ist das erste Gehäuseteil abgetrennt von weiteren Gehäuseteilen.**

Bei einer vorteilhaften Ausgestaltung umfasst der unterbrochene Einpass drei oder mehr bogenabschnitt- oder kreisbogenabschnittförmige Vertiefungen oder herausragende Bereiche des Gehäuseteils. Insbesondere sind diese entsprechend fein bearbeitet.

Bei einer vorteilhaften Ausgestaltung umfasst der unterbrochene Einpass mindestens zwei oder mindestens drei Zentrierbereiche, die voneinander beabstandet sind. Von Vorteil ist dabei, dass insbesondere bei drei oder mehr Bereichen eine stabile Lagerung der Gehäuseteile ineinander erreichbar ist. Die Unterbrechung des Einpasses ist in demjenigen Raumbereich ausgeführt, in welchem der Schieber des Druckgießens herausziehbar sein muss.

Bei einer vorteilhaften Ausgestaltung ist der unterbrochene Einpass kreisförmig ausgeführt. Von Vorteil ist dabei, dass die Herstellung einfach und kostengünstig mit denselben Werkzeugmaschinen ausführbar ist wie ein ununterbrochener Einpass.

Bei einer vorteilhaften Ausgestaltung ist das weitere Gehäuseteil mit dem ersten Gehäuseteil verbunden und das weitere Gehäuseteil ist ein Zwischenflansch, dessen Zentriermittel, insbesondere herausragende Bereiche, am ersten Zentriermittel zentriert ist. Von Vorteil ist dabei, dass die Zentrierung einerseits mittels eines Lageraußenrings derart erfolgen kann, dass ein erster axialer Bereich des Rings mit dem Zentriermittel des ersten Gehäuseteils in Wirkverbindung ist und ein zweiter axialer Bereich des Rings mit dem Zentriermittel des zu verbindenden Gehäuseteils. Statt dieser Zentrierung über den Außenring ist aber auch ein direktes Zentrieren des zu verbindenden weiteren Gehäuseteils am ersten Gehäuseteil ausführbar. Bei dieser Variante ist dann ein Lager nicht-koaxial zum ersten Zentriermittel des ersten Gehäuseteils im weiteren Gehäuseteil vorsehbar. Auf dieser Weise ist ein anderer Achsabstand realisierbar als bei der koaxialen Variante. Im Gegensatz zum Stand der Technik ist somit jeder Getriebestufe ein Gehäuseteil zuordenbar, wobei durch diese Aufteilung in zwei Gehäuseteile verschiedene Achsabstände bei den hergestellten Getrieben realisierbar sind. Insbesondere ist hierbei die Ausführung der Gehäuseteile druckgussfähig.

Bei einer vorteilhaften Ausgestaltung ist das weitere Gehäuseteil mit dem ersten Gehäuseteil verbunden und das weitere Gehäuseteil ist ein zweites Gehäuseteil, das mittels eines Lageraußenrings als Zentriermittel, am ersten Zentriermittel zentriert ist, insbesondere wobei der Lageraußenring in einer Lageraufnahme des zweiten Gehäuseteils teilweise eingepresst vorgesehen ist und der Lageraußenring mit seinem aus dem zweiten Gehäuseteil herausragenden Bereich mit dem Zentriermittel des ersten Gehäuseteils in Wirkverbindung zum Zentrieren gebracht ist. Von Vorteil ist dabei, dass mittels des sowieso vorhandenen Lagers die Zentrierung ausgeführt wird und somit keine zusätzlichen Teile notwendig sind.

Bei einer vorteilhaften Ausgestaltung umfasst als weiteres Gehäuseteil ein zweites Gehäuseteil eine Lageraufnahme, in der ein Lager aufgenommen ist, dessen Außenring an den Zentriermitteln des ersten Gehäuseteils zentrierend wirksam ist. Von Vorteil ist dabei, dass das Lager der Ritzelwelle der abtreibenden Getriebestufe, insbesondere der Winkelgetriebestufe, zum Zentrieren nutzbar ist. Besonders vorteilhaft ist dabei, dass als Winkelgetriebestufe eine Spiroplangetriebestufe einsetzbar ist, bei der ein sehr genaues Zentrieren ausführbar sein muss.

Wichtig ist auch, dass das erste Zentriermittel am ersten Gehäuseteil beim Herstellen desselben mit der erforderlichen Genauigkeit bearbeitet wird und der Außenring des Lagers der zugehörigen eintreibenden Welle direkt an diesem Zentriermittel ausgerichtet wird, ohne dass ein großer Kraftaufwand hierbei wirkt oder notwendig ist.

Bei einer vorteilhaften Ausgestaltung ist das erste Getriebegehäuse gehäusebildend für eine abtreibende Getriebestufe, insbesondere Winkelgetriebestufe. Von Vorteil ist dabei, dass eine Spiroplangetriebestufe verwendbar ist, bei der das Ritzel besonders genau zu zentrieren ist.

Bei einer vorteilhaften Ausgestaltung ist das zweite Getriebegehäuse gehäusebildend für eine eintreibende Getriebestufe, insbesondere Stirnradgetriebestufe, und/oder für einen Kupplungsteil. Von Vorteil ist dabei, dass das Gehäuseteil ebenfalls druckgussfähig ausgestaltbar ist und somit beide Gehäuseteile druckgussfähig sind. Somit ist ein zweistufiges Winkelgetriebe kostengünstig herstellbar und außerdem eine hohe Varianz in der Getriebebaureihe mit wenigen Teilen erreichbar.

Bei einer vorteilhaften Ausgestaltung ist die eintreibende Welle und/oder ein Lager der eintreibenden Welle der vom ersten Getriebegehäuse umfassten Getriebestufe koaxial zum ersten Zentriermittel angeordnet. Von Vorteil ist dabei, dass die Zentrierung über einen Lageraußenring ausführbar ist und somit in einfacher Weise.

Bei einer vorteilhaften Ausgestaltung ist die eintreibende Welle und/oder ein Lager der eintreibenden Welle der vom ersten Getriebegehäuse umfassten Getriebestufe nicht koaxial zum ersten Zentriermittel angeordnet, wobei das weitere Gehäuseteil am ersten Zentriermittel zentriert ist und das Zentriermittel des weiteren Gehäuseteils koaxial angeordnet ist. Von Vorteil ist dabei, dass auch andere Achs-Abstände als bei der koaxialen Variante ausführbar sind. Dabei ist das abtreibende Getriebegehäuse wiederverwendbar.

Bei einer vorteilhaften Ausgestaltung weist eintriebseitig das zweite Gehäuseteil wahlweise als
- gehäusebildendes Gehäuseteil für eine Stirnradstufe ausgeführt ist, wobei es Lageraufnahmen für Lager der abtreibenden Welle der Stirnradstufe umfasst,
- mit dem ersten Getriebegehäuse verbindbares Motorflanschteil vorgesehen ist, das eine Lageraufnahme zur Aufnahme des abtriebsseitigen Lagers der Rotorwelle des Motors umfasst,
- gehäusebildendes Gehäuseteil für ein Klauenkupplungsteil ausgeführt ist, wobei es Lageraufnahmen für Lager der eintreibenden Welle der abtreibenden Getriebestufe umfasst.

Von Vorteil ist dabei, dass eine Baureihe mit hoher Vielfalt, also Varianz, mit geringer Anzahl von Teilen erreichbar ist.

Bei einer vorteilhaften Ausgestaltung ist das zweite Gehäuseteil derart gestaltet, dass es im Druckgussverfahren herstellbar ist. Von Vorteil ist dabei, dass eine kostengünstige Herstellung aller Gehäuseteile ermöglicht ist. Hierzu trägt besonders auch die zumindest Zweiteilung des Getriebegehäuses bei.

Wichtige Merkmale bei dem Verfahren zur Herstellung von Getrieben aus einem Baukasten sind,
dass das Getriebe zumindest ein erstes Gehäuseteil umfasst,
**wobei** das erste Gehäuseteil im Druckgussverfahren hergestellt wird,
wobei am ersten Gehäuseteil als erstes Zentriermittel ein unterbrochener Einpass vorgesehen wird, insbesondere zur Zentrierung des am ersten Gehäuseteil vorgesehenen weiteren Gehäuseteils.

Von Vorteil ist dabei, dass der unterbrochene Einpass im Bereich um denjenigen Raumbereich herum vorgesehen ist, der für das Herausziehen des Schiebers beim Druckgießen freizuhalten ist. Trotzdem ist der Einpass mit drei Bereichen derart stabil ausführbar, dass die Zentrierung in guter Qualität, also hoher Genauigkeit, erfolgt. Insbesondere ist dabei wichtig, dass keine hohen Kräfte beim Zentrieren wirken und somit auch schon der unterbrochene Einpass zum zentrieren geeignet ist.

Bei einer vorteilhaften Ausgestaltung wird das weitere Gehäuseteil im Druckgussverfahren hergestellt. Von Vorteil ist dabei, dass das gesamte Getriebegehäuse auf diese Weise herstellbar ist und dadurch nicht nur kostengünstige sondern hoch Variante Getriebe herstellbar sind.

Bei einer vorteilhaften Ausgestaltung ist das weitere Gehäuseteil derart gewählt und gestaltet, dass wahlweise in einer ersten Variante die eintreibende Welle der vom ersten Gehäuseteils umfassten Getriebestufe im weiteren Gehäuseteil zumindest mit einem Lager gelagert wird und koaxial zu dem Zentriermittel des ersten Gehäuseteils vorgesehen wird oder in einer zweiten Variante die eintreibende Welle der vom ersten Gehäuseteils umfassten Getriebestufe im weiteren Gehäuseteil zumindest mit einem Lager gelagert wird und nicht-koaxial zu dem Zentriermittel des ersten Gehäuseteils vorgesehen wird.

Von Vorteil ist dabei, dass durch einfache Ausführungsart verschiedene Achsabstände bei der Winkelgetriebestufe erzeugbar sind, wobei in der ersten Variante der Außenring des Lagers und in der zweiten Variante das weitere Gehäuseteil zum Zentrieren verwendet wird.

Bei einer vorteilhaften Ausgestaltung ist das weitere Gehäuseteil
- in einer Variante gehäusebildend für eine Stirnradstufe;
- umfasst in einer weiteren Variante ein Lager der Rotorwelle,
- in einer weiteren Variante zwei Lager umfasst zur Lagerung der eintreibenden Welle der vom ersten Gehäuseteil umfassten Getriebestufe, wobei zwischen der Welle und der Rotorwelle des antreibenden Motors eine Kupplung vorgesehen ist.

Von Vorteil ist dabei, dass mit einer geringen Anzahl von Teilen eine hohe Varianz an Getrieben erzeugbar ist.

Bei einer vorteilhaften Ausgestaltung weist der Motor abtriebsseitig einen Quadratflansch auf oder einen Rundflansch. Von Vorteil ist dabei, dass verschiedene Motoren mit dem jeweiligen Getriebe der Baureihe verbindbar sind, insbesondere Servomotoren mit Quadratflansch und Normmotoren mit Rundflansch.

Wichtige Merkmale bei dem Baukasten zur Herstellung von Getrieben einer Getriebebaureihe sind,
dass das Getriebe zumindest ein erstes Gehäuseteil umfasst,
**wobei** das erste Gehäuseteil im Druckgussverfahren hergestellt wird,
wobei am ersten Gehäuseteil als erstes Zentriermittel ein unterbrochener Einpass zur zentrierenden Verbindung mit einem weiteren Gehäuseteil vorgesehen wird,
wobei in einer ersten Variante das weitere Gehäuseteil derart gewählt und gestaltet ist, dass die eintreibende Welle der vom ersten Gehäuseteils umfassten Getriebestufe im weiteren Gehäuseteil zumindest mit einem Lager gelagert wird und koaxial zu dem Zentriermittel des ersten Gehäuseteils vorgesehen wird
wobei in einer zweiten Variante das weitere Gehäuseteil derart gewählt und gestaltet ist, dass die eintreibende Welle der vom ersten Gehäuseteils umfassten Getriebestufe im weiteren Gehäuseteil zumindest mit einem Lager gelagert wird und nicht-koaxial zu dem Zentriermittel des ersten Gehäuseteils vorgesehen wird.

Von Vorteil ist dabei, dass wiederum Druckguss verwendbar ist und trotz des dann vorzusehenden unterbrochenen Einpasses eine genügend gute Zentrierung erfolgt.

Außerdem ist das Gehäuse des Getriebnes zumindest zweiteilig ausgeführt und somit eine hohe Variantenvielfalt mit geringer Teilezahl erzeugbar.

### Bezugszeichenliste

- 1: Gehäuseteil
- 2: Bohrung für Befestigungsschrauben
- 3: Zentrierung, unterbrochener Einpass
- 4: Ziehrichtung des Schiebers beim Druckgießen des Getriebegehäuses 1
- 20: Gehäuseteil
- 21: Befestigungsschrauben
- 31: Lager
- 32: Spiroplan-Rad
- 33: Spiroplan-Ritzelwelle
- 34: Zahnrad
- 35: Zahnrad
- 41: Lager
- 42: Spiroplan-Ritzelwelle
- 51: Spiroplan-Ritzelwelle
- 52: Lager
- 53: Lager
- 54: Klauenkupplung
- 55: Kupplungsgehäuse
- 60: Gehäuseteil
- 61: Spiroplan-Ritzelwelle
- 62: Lager
- 63: Lager
- 64: Klauenkupplung
- 65: Kupplungsgehäuse

Die Erfindung wird nun anhand von Abbildungen näher erläutert:

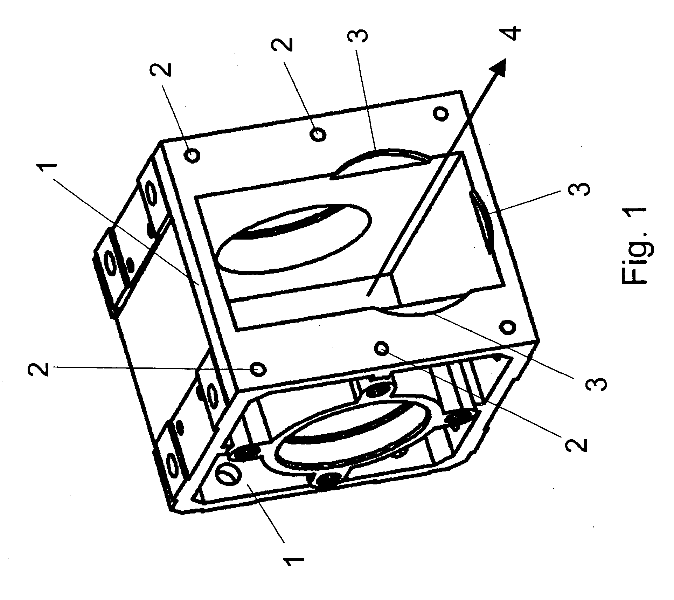

In der Figur 1 ist ein erfindungsgemäßes Gehäuseteil 1 des Getriebes in Schrägansicht gezeigt. Dabei ist das Innere zur Aufnahme der abtreibenden Stufe vorgesehen. Diese ist bei den gezeigten Ausführungsbeispielen als Spiroplanstufe vorgesehen.

Das Gehäuseteil 1 ist in Druckgusstechnik fertigbar. Hierzu ist die Ziehrichtung 4 des Schiebers beim Druckgießen des Getriebegehäuses 1 angedeutet.

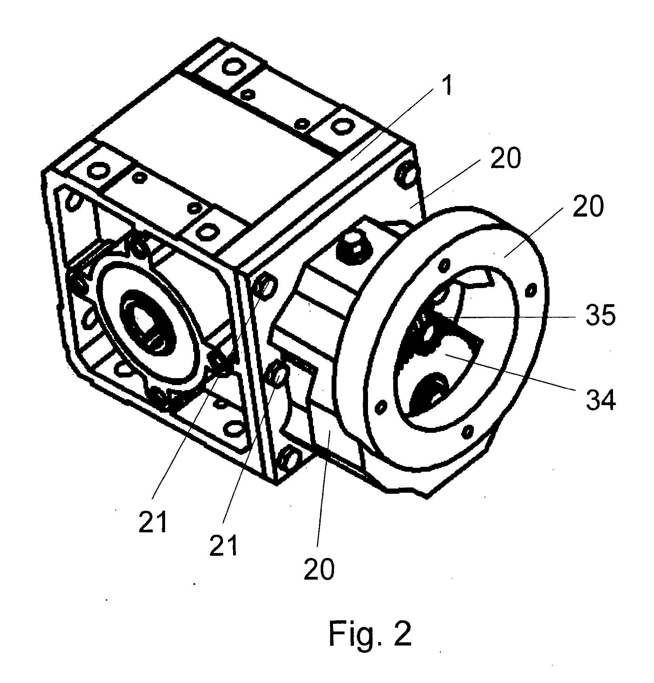

Am Gehäuseteil 1 sind Bohrungen 2 für Befestigungsschrauben vorgesehen, mit welchem ein eintriebsseitiges Gehäuseteil 20, das in Figur 2 erkennbar ist, befestigbar ist. Das Gehäuseteil 1 weist dabei drei kreisbogenförmig verlaufende stufenförmigen Zentrierungen 3 auf, die einen unterbrochenen Einpass darstellen.

An diesen Zentrierabschnitten ist das Gehäuseteil 20 zentrierbar, also in seine relative räumliche Lage zum Gehäuseteil 1 bringbar. Nach dem Zentrieren wird mit Anziehen der Befestigungsschrauben 21 die Verbindung der Gehäuseteile 1 und 20 zueinander bewirkt. Dabei werden die Gehäuseteile 1, 20 aufeinander gepresst. Die Zentrierungen 3 müssen nur geringe Kräfte aufnehmen, da die wesentlichen Kraftflüsse an den aufeinander gepressten Oberflächenbereichen durchtreten.

Zwar ist durch die unterbrochene Ausführung des Einpasses, also der Zentrierung,

Die Zentrierungsbereiche 3 sind in einer Ebene orientiert, deren Normalenrichtung in Ziehrichtung 4 liegt. Bei der Zentrierung der Gehäuseteile werden diese in Ziehrichtung aufeinander zu bewegt.

Vorteiligerweise ist das Gehäuseteil 20 ebenfalls in Druckgusstechnik fertigbar.

,Wie in Figur 2 gezeigt, ist das Gehäuseteil 1 im Wesentlichen gehäusebildend für die abtreibende Getriebestufe, die als Spiroplangetriebestufe realisiert ist, das Gehäuseteil 20 hingegen im Wesentlichen gehäusebildend für die eintreibender angeordnete Getriebestufe, die als Stirnradgetriebestufe, umfassend die miteinander in Eingriff stehenden Zahnräder (34,35) realisiert ist.

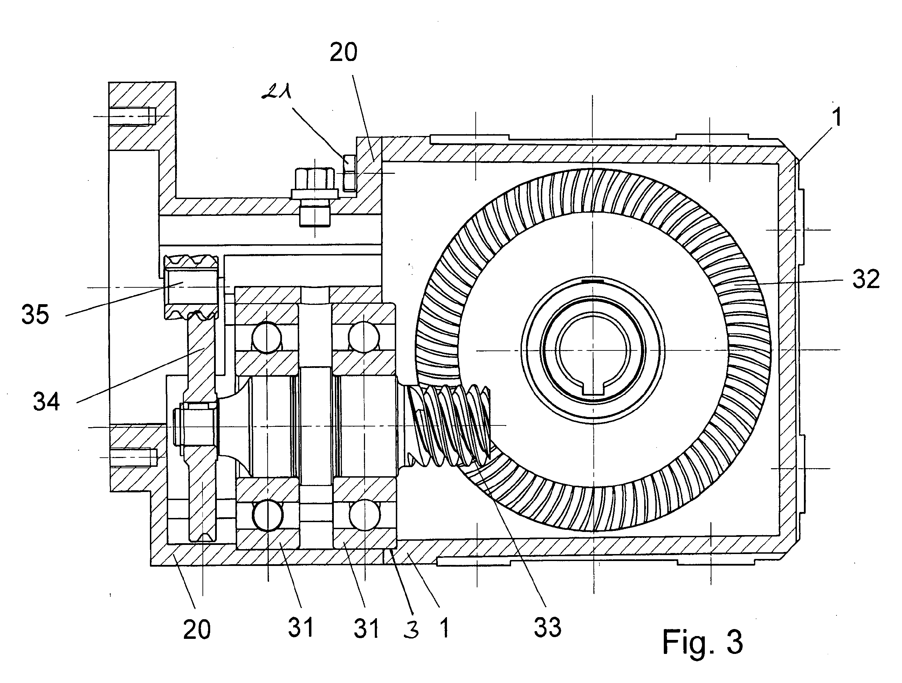

In Figur 3 ist ein Querschnitt gezeigt, in dem die Zahnräder der eintreibenden Stirnradstufe (34,35) gezeigt sind, wobei das abtreibende Zahnrad 34 auf der Spiroplan-Ritzelwelle 33 angeordnet ist, insbesondere formschlüssig und möglichst spielarm verbunden ist. Die Spiroplan-Ritzelwelle 33 ist zum Spiroplan-Rad 32 hin gerichtet mit einer Spiroplanverzahnung ausgeführt. Dies bedeutet, dass die äußere Einhüllende der Ritzelverzahnung im Wesentlichen zylindrisch ist, die Achse des Ritzels senkrecht zur Achse des auf seiner Planseite mit Spiroplanverzahnung verzahnten Rades 32 angeordnet ist, wobei ein Achsversatz, also ein nichtverschwindender minimaler Abstand, vorhanden ist. Der Achsabstand beträgt zwischen 10 und 40 % des Außendurchmessers des Rades 32.

Die Spiroplan-Ritzelwelle 33 ist mittels der Lager 31 im Gehäuseteil 20 der eintreibenden Stufe gelagert.

Das abtriebseitige Lager 31 wird zur Zentrierung der Gehäuseteile 1 und 20 dadurch verwendet, dass sein Außenring in einem ersten axialen Bereich eingepresst gehalten ist und der angrenzende Bereich des Außenrings aus dem Gehäuseteil 20 heraussteht und hervorragt. Dieser herausragende Teilbereich wird beim Zusammenführen der Gehäuseteile (1,20) zueinander zur Zentrierung an den drei kreisförmigen Zentrierbereichen 3 verwendet. Dabei legt sich der Außenring in die kreisförmigen Bereiche 3 ein und das Gehäuseteil 20 wird somit beim Anziehen der in den Bohrlöchern 2 einzuschraubenden Befestigungsschrauben 21 in seiner relativen räumlichen Lage zum Gehäuseteil 1 festgelegt.

Insbesondere im Gegensatz zum Stand der Technik ist durch die zweigeteilte Ausführung des Getriebegehäuses, also durch die Vorsehung der beiden separaten Gehäuseteile 1 und 20, ermöglicht, beide Teile derart auszugestalten, dass sie mittels Druckguss herstellbar sind. Beim Gehäuseteil 20 werden dabei zwei Schieber beim Druckgießen verwendet, deren Ziehrichtung zueinander entgegengesetzt ist. Alle Ziehrichtungen für beide in den Figuren 2 und 3 gezeigten Gehäuseteile 1 und 20 sind parallel.

Für das Druckgießen des Gehäuseteils 1 ist nur 1 Schieber notwendig, für das Druckgießen des Gehäuseteils 20 sind zwei Schieber notwendig. Weitere Schieber sind nicht notwendig. Um ein druckgussfähiges Gehäuseteil herstellbar zu machen, muss stets eine Ausnehmung innerhalb des Gehäuseteils vorgesehen werden, aus der der Schieber in Ziehrichtung nach dem Druckgießen herausziehbar ist.

Eintriebsseitig ist in Figur 2 und 3 ein Elektromotor verbindbar, wobei das Zahnrad 35 mit der Motorwelle verbindbar ist als Einsteckritzel oder Aufsteckritzel. Alternativ ist aber auch die entsprechende Verzahnung direkt auf der Motorwelle vorsehbar. Die Lagerung dieses Verzahnungsteils ist also in jedem Fall über den Motor ausgeführt, insbesondere über die Lager der Rotorwelle des Motors.

In der Ausführung nach Figur 2 und 3 ist die Achse der Spiroplan-Ritzelwelle koaxial zu den Zentrierbereichen 3 ausgerichtet und zielt somit also auf den Mittelpunkt des den Zentrierbereichen zugeordneten Kreises. Die Spiroplan-Ritzelwelle ist also koaxial zum Einpass ausgerichtet.

Somit ist gemäß dem Ausführungsbeispiel nach Figur 2 und 3 ein zweistufiges Spiroplangetriebe realisiert, dessen eintreibende Stufe ein Stirnradstufe und dessen abtreibende Winkelgetriebestufe ein Spiroplangetriebestufe ist, wobei ein Achsversatz realisierbar ist und die bekannten Vorteile der Spiroplanverzahnung erhältlich sind.

Statt der Spiroplangetriebestufe sind bei weiteren erfindungsgemäßen Ausführungsbeispielen auch andere Winkelgetriebestufen, wie beispielsweise Kegelradgetriebestufe oder Schneckengetriebestufe oder Hypoid-Getriebestufe einsetzbar, die ihre jeweiligen bekannte Vorteile aufweisen.

Durch die zweigeteilte Ausführung des Gehäuses ist aber auch ein Baukasten herstellbar, der mit einer geringen Teilezahl eine hohe Varianz von Getrieben oder Getriebemotoren herstellbar macht, also insbesondere auch eine Getriebemotorbaureihe.

Dabei ist das Gehäuseteil 20 durch ein anderes eintreibendes Gehäuseteil mit Zwischenflansch ersetzbar, bei dem die Spiroplan-Ritzelwelle 33 nicht koaxial ausgerichtet ist zum Einpass. Dabei weist dann der Zwischenflansch einen Zentrierbund auf, mit welchem er an der Zentrierung 3 zentriert ist am Gehäuseteil 1. Außerdem weist der Zwischenflansch Zentriermittel auf zur Zentrierung des eintreibenden Gehäuseteils am Zwischenflansch.

Durch die nicht-koaxiale Ausrichtung der Ritzelwelle zur Zentrierung 3 hin ist es ermöglicht, bei dieser entsprechenden Ausführungsvariante einen anderen Achsabstand vorzusehen als bei der koaxialen Variante nach Figur 2 und 3. Somit sind in Druckguss herstellbare Gehäuseteile verwendbar und zusätzlich sind verschiedene Achsabstände unter Verwendung desselben Abtriebsgehäuseteils erzeugbar.

Vorzugsweise ist als Druckguss Aluminiumdruckguss verwendet. Die Erfindung ist aber auch bei Kunststoffgetrieben einsetzbar.

In der Ausführung nach Figur 2 und 3 sind zwei nicht gezeigte Lager für die ebenfalls nicht gezeigte Rotorwelle vorgesehen.

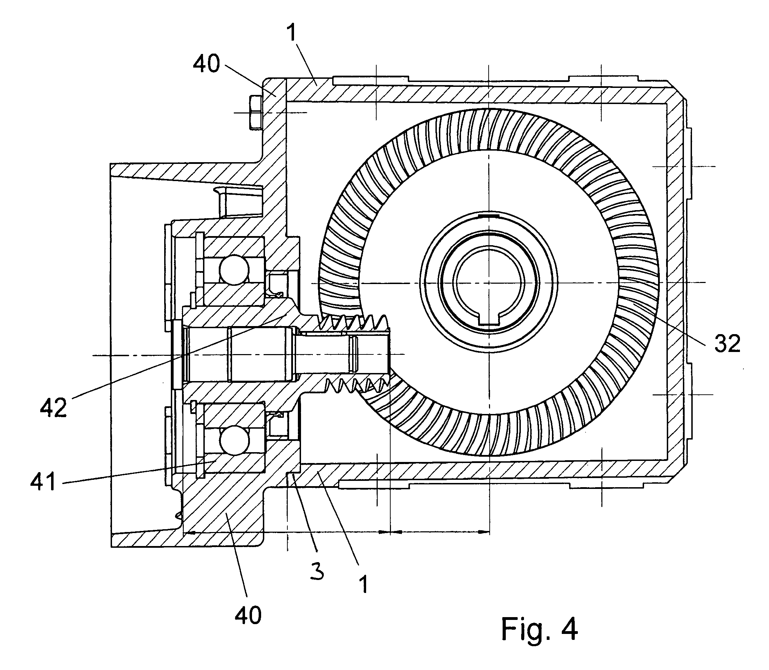

In der Figur 4 ist ein anderes Getriebe gezeigt, wobei am Gehäuseteil 1 statt des Gehäuseteils 20 das Gehäuseteil 40 vorgesehen ist, das Zentriermittel, insbesondere entsprechend ausgeprägte hervor stehende Bereiche, umfasst zum Zentrieren an den Zentrierberiechen 3 des Gehäuseteils 1. Darüber hinaus ist auch das Gehäuseteil 40 mittels Druckguss herstellbar. Es ist auch als abtriebsseitiger Motorflansch bezeichenbar, da an ihm das Motorgehäuse verbindbar ist und die Motorwelle entweder mit der Spiroplan-Ritzelwelle 42 verbindbar ist oder einstückig ausführbar ist. In jedem Fall dient aber das Lager 41 zum Lagern der Rotorwelle des Motors und ist aufgenommen im Gehäuseteil 40. Es hat also hierbei keine Zentrierfunktion für zwei Gehäuseteile.

Von Vorteil ist bei der Ausführung nach Figur 4 auch die kompakte Ausgestaltung des gesamten Getriebemotors. Er benötigt in axialer Richtung der Motorwelle nur wenig Bauraum, weil nur zwei Lager für die Gesamtwelle, umfassend Rotor und Spiroplanritzel, also eintreibendes Ritzel des Getriebes, benötigt werden.

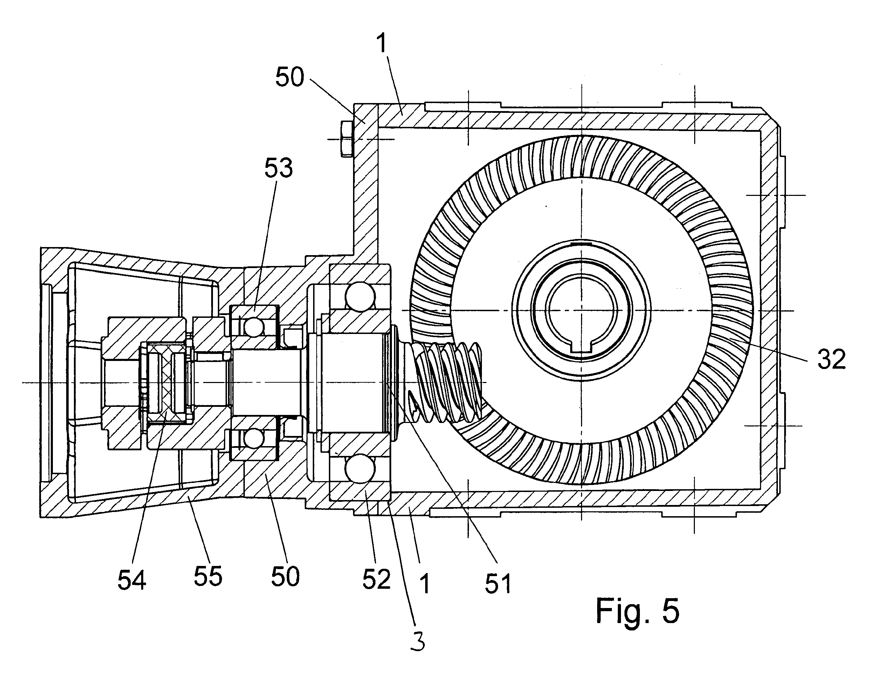

In der Figur 5 ist ein anderes Getriebe gezeigt, wobei am Gehäuseteil 1 statt des Gehäuseteils 20 oder 40 das Gehäuseteil 50 vorgesehen ist, wobei das Lager 52 zum gegenseitigen Zentrieren der Gehäuseteile (1, 50) an den Zentrierberiechen 3 des Gehäuseteils 1 - analog zur Zentrierung durch das abtriebsseitig Lager 31 der Ausführung nach Figur 3. Darüber hinaus ist auch das Gehäuseteil 50 mittels Druckguss herstellbar. Es weist zwei Lageraufnahmebereiche vor, nämlich für die Lager 52 und 53, die zur Lagerung der Spiroplan-Ritzelwelle 51 vorgehen sind. Eintriebsseitig ist eine Adapter vorgesehen, der in seinem Gehäuse 55 eine Klauenkupplung 54 umfasst. An seinem eintriebsseitigen Ende weist der Adapter eine derartige Schnittstelle, umfassend Form und Bohrbild für Befestigungsschrauben und Zentriermittel auf, dass ein Synchronmotor oder Servomotor, insbesondere mit abtriebsseitiger Quadratflansch-Ausführung, verbindbar ist. Somit ist zwischen Getriebe und Motor eine Kupplung vorsehbar.

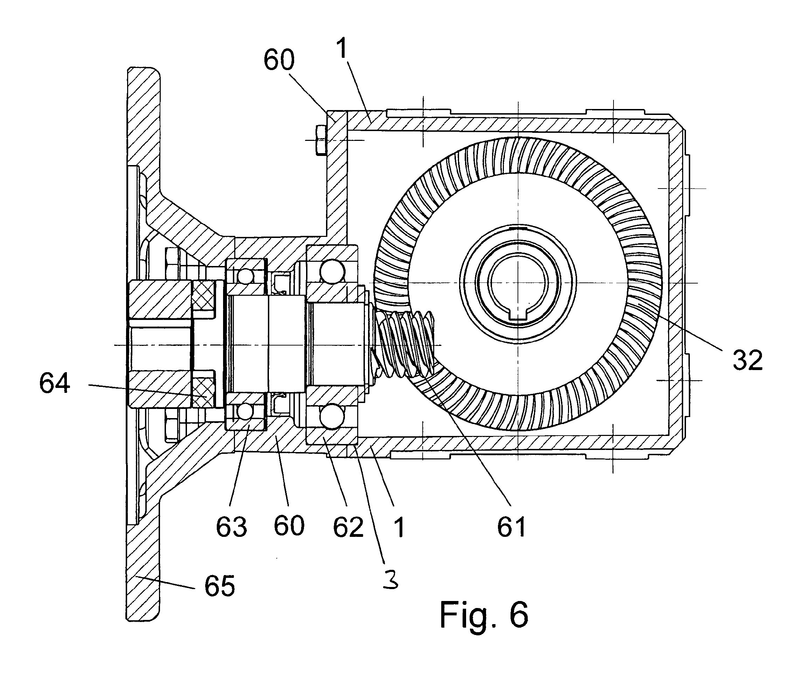

In der Figur 6 ist ein anderes Getriebe gezeigt, wobei am Gehäuseteil 1 statt des Gehäuseteils 20 oder 40 oder 50 das Gehäuseteil 60 vorgesehen ist, wobei das Lager 62 zum gegenseitigen Zentrieren der Gehäuseteile (1, 60) an den Zentrierberiechen 3 des Gehäuseteils 1 - analog zur Zentrierung durch das abtriebsseitig Lager 31 der Ausführung nach Figur 3. Darüber hinaus ist auch das Gehäuseteil 60 mittels Druckguss herstellbar. Es weist zwei Lageraufnahmebereiche vor, nämlich für die Lager 62 und 63, die zur Lagerung der Spiroplan-Ritzelwelle 61 vorgehen sind. Eintriebsseitig ist ein Adapter vorgesehen, der in seinem Gehäuse 65 eine Klauenkupplung 64 umfasst, wobei zwischen den Klauen die Radialteile eines sternförmig ausgebildeten Kunststoffteils angeordnet sind, wobei die Radialteile an einem Grundkörper des Kunststoffteils einstückig angeformt sind. An seinem eintriebsseitigen Ende weist der Adapter eine derartige Schnittstelle, umfassend Form und Bohrbild für Befestigungsschrauben und Zentriermittel auf, dass ein IEC-Normmotor, der mit abtriebsseitigem Rundflansch-Ausführung ausgeführt ist, verbindbar ist. Somit ist zwischen Getriebe und Norm-Motor eine Kupplung vorsehbar.

Die Figuren 3 bis 6 verdeutlichen dabei die Vielfalt von Getriebemotoren, welche mit einer geringen Teilezahl aus dem Baukasten erzeugbar sind.

Bei allen Ausführungen ist in einer weiteren Ausführungsvariante statt der koaxialen Ausrichtung der Zentriermittel bei Figur 4 beziehungsweise der koaxialen Ausrichtung des abtriebsseitigen Lagers der Spiroplan-Ritzelwelle eine nicht-koaxiale Ausrichtung ausführbar, wobei dann das abtriebsseitige Lager nicht-koaxial zu den Zentrierberiechen 3 ausgerichtet ist. Wie schon für Figur 2 und 3 geschildert, ist bei Figur 5 und 6 hierzu ein Zwischenflansch vorsehbar, der an der Zentrierung 3 zentriert wird mit seinen heraus ragenden Bereichen und eintriebsseitig Zentriermittel zum Zentrieren des Gehäuseteils 50 beziehungsweise 60 aufweist, wobei die Ritzelwelle und ihre im Gehäuseteil 50 oder 60 vorgesehene Lageraufnahme nicht koaxial zur Zentrierung 3 am Gehäuseteil 1 vorgesehen ist. Auf diese Weise ist in der entsprechenden jeweiligen Ausführungsvariante ein anderer Achsabstand der Spiroplangetriebestufe realisierbar als bei den in den Figuren gezeigten Ausführungsbeispielen.

## Patentansprüche

1. Getriebe, umfassend zumindest ein erstes Gehäuseteil (1),
wobei am ersten Gehäuseteil (1) als erstes Zentriermittel ein unterbrochener Einpass (3) vorgesehen ist zur Zentrierung eines am ersten Gehäuseteil (1) vorgesehenen weiteren Gehäuseteils (20), **dadurch gekennzeichnet**,
wobei das erste Gehäuseteil (1) als Druckgussteil derart ausgeführt ist, dass es im Druckgussverfahren mit nur einem Schieber hergestellt ist,
wobei der unterbrochene Einpass (3) drei oder mehr bogenabschnitt- oder kreisbogen-abschnittförmige Vertiefungen oder herausragende Bereiche des ersten Gehäuseteils (1) umfasst.
wobei das zweite, also weitere, Gehäuseteil (20) als Druckgussteil derart ausgeführt ist, dass es im Druckgussverfahren hergestellt ist, in dem zwei Schieber verwendet sind, deren Ziehrichtung zueinander entgegengesetzt ist.

2. Getriebe nach Anspruch 1,
**dadurch gekennzeichnet, dass**
**das weitere Gehäuseteil (20) mit dem ersten Gehäuseteil (1) verbunden ist und das weitere Gehäuseteil (20) mittels eines Lageraußenrings als Zentriermittel am ersten Zentriermittel zentriert ist.**

3. Getriebe nach Anspruch 1 oder 2,
**dadurch gekennzeichnet, dass**
**das erste Getriebegehäuse (1) gehäusebildend für eine abtreibende Getriebestufe ist. ,**

4. Getriebe nach Anspruch 1, 3 oder 2,
**dadurch gekennzeichnet, dass**
**das zweite Getriebegehäuse (20) gehäusebildend für eine eintreibende Getriebestufe ist oder für einen Kupplungsteil.**

5. Getriebe nach einem der vorangegangenen Ansprüche,
**dadurch gekennzeichnet, dass**
**die Unterbrechung des Einpasses (3) in demjenigen Raumbereich ausgeführt ist, in welchem der Schieber nach dem Druckgussherstellverfahren herausgezogen wurde.**

6. Getriebe nach einem der vorangegangenen Ansprüche,
**dadurch gekennzeichnet, dass**
der unterbrochene Einpass (3) drei oder mehr bogenabschnittförmige oder kreisbogenabschnittförmige Vertiefungen oder herausragende Bereiche des Gehäuseteils (1) umfasst, **die entsprechend fein bearbeitet sind.**

7. Getriebe nach einem der vorangegangenen Ansprüche,
**dadurch gekennzeichnet, dass**
der unterbrochene Einpass (3) mindestens zwei oder mindestens drei Zentrierbereiche umfasst, die voneinander beabstandet sind.

8. Getriebe nach einem der vorangegangenen Ansprüche,
**dadurch gekennzeichnet, dass**
der unterbrochene Einpass (3) kreisförmig ausgeführt ist.

9. Getriebe nach einem der vorangegangenen Ansprüche,
**dadurch gekennzeichnet, dass**
das weitere Gehäuseteil (20) mit dem ersten Gehäuseteil (1) verbunden ist und das weitere Gehäuseteil (20) ein Zwischenflansch ist, dessen Zentriermittel am ersten Zentriermittel zentriert ist.

10. Getriebe nach Anspruch 9,
**dadurch gekennzeichnet, dass**
**die Zentriermittel herausragende Bereiche sind.**

11. Getriebe nach einem der vorangegangenen Ansprüche,
**dadurch gekennzeichnet, dass**
**das weitere Gehäuseteil (20) mit dem ersten Gehäuseteil (1) verbunden ist und das weitere Gehäuseteil (20) ein zweites Gehäuseteil ist, das mittels eines Lageraußenrings als Zentriermittel, am ersten Zentriermittel zentriert ist, wobei der Lageraußenring in einer Lageraufnahme des zweiten Gehäuseteils (20) teilweise eingepresst vorgesehen ist und der Lageraußenring mit seinem aus dem zweiten Gehäuseteil (20) herausragenden Bereich mit dem Zentriermittel des ersten Gehäuseteils (1) in Wirkverbindung zum** zentrieren **gebracht ist.**

12. Getriebe nach einem der vorangegangenen Ansprüche,
**dadurch gekennzeichnet, dass**
als weiteres Gehäuseteil (20) des zweites Gehäuseteil (20) eine Lageraufnahme umfasst, in der ein Lager aufgenommen ist, dessen Außenring an den Zentriermitteln des ersten Gehäuseteils (1) zentrierend wirksam ist.

13. Getriebe nach einem der vorangegangenen Ansprüche,
**dadurch gekennzeichnet, dass**
die eintreibende Welle und/oder ein Lager der eintreibenden Welle der vom ersten Getriebegehäuse (1) umfassten Getriebestufe koaxial zum ersten Zentriermittel angeordnet ist.

14. Getriebe nach einem der vorangegangenen Ansprüche,
**dadurch gekennzeichnet, dass**
die eintreibende Welle und/oder ein Lager der eintreibenden Welle der vom ersten Getriebegehäuse (1) umfassten Getriebestufe nicht koaxial zum ersten Zentriermittel angeordnet ist, wobei das weitere Gehäuseteil (20) am ersten Zentriermittel zentriert ist und das Zentriermittel des weiteren Gehäuseteils (20) koaxial angeordnet ist.

15. Getriebe nach einem der vorangegangenen Ansprüche,
**dadurch gekennzeichnet, dass**
eintriebseitig das zweite Gehäuseteil (20) wahlweise als
- gehäusebildendes Gehäuseteil für eine Stirnradstufe ausgeführt ist, wobei es Lageraufnahmen für Lager der abtreibenden Welle der Stirnradstufe umfasst,
- mit dem ersten Getriebegehäuse (1) verbindbares Motorflanschteil vorgesehen ist, das eine Lageraufnahme zur Aufnahme des abtriebsseitigen Lagers der Rotorwelle **des das Getriebe antreibenden** Motors umfasst,
- gehäusebildendes Gehäuseteil für ein Klauenkupplungsteil ausgeführt ist, wobei es Lageraufnahmen für Lager der eintreibenden Welle der abtreibenden Getriebestufe umfasst.

16. Verfahren zur Herstellung von Getrieben aus einem Baukasten,
wobei das Getriebe zumindest ein erstes Gehäuseteil (1) umfasst,
wobei am ersten Gehäuseteil (1) als erstes Zentriermittel ein unterbrochener Einpass (3) vorgesehen wird zur Zentrierung eines am ersten Gehäuseteil (1) vorgesehenen weiteren Gehäuseteils (20),
**dadurch gekennzeichnet, dass**
**der unterbrochene Einpass (3) drei oder mehr bogenabschnitt- oder kreisbogenabschnittförmige Vertiefungen oder herausragende Bereiche des Gehäuseteils (1) umfasst,**
wobei das erste Gehäuseteil (1) **als Druckgussteil ausgeführt wird, indem es beim Druckgussverfahren mit einem einzigen Schieber hergestellt wird,**
**wobei das zweite Gehäuseteil (20) als Druckgussteil im Druckgussverfahren hergestellt wird, indem zwei Schieber verwendet werden, deren Ziehrichtung zueinander entgegengesetzt ausgerichtet ist.**

17. Verfahren nach Anspruch 16,
**dadurch gekennzeichnet, dass**
**die Unterbrechung des Einpasses** (3) **in demjenigen Raumbereich ausgeführt ist, in welchem der Schieber nach dem Druckgussherstellverfahren herausgezogen wird.**

18. Verfahren nach einem der Ansprüche 16 bis 17,
**dadurch gekennzeichnet, dass**
das weitere Gehäuseteil (20) derart gewählt und gestaltet ist, dass wahlweise in einer ersten Variante die eintreibende Welle der vom ersten Gehäuseteils (1) umfassten Getriebestufe im weiteren Gehäuseteil (20) zumindest mit einem Lager gelagert wird und koaxial zu dem Zentriermittel des ersten Gehäuseteils (1) vorgesehen wird
oder in einer zweiten Variante die eintreibende Welle der vom ersten Gehäuseteil (1) umfassten Getriebestufe im weiteren Gehäuseteil (20) zumindest mit einem Lager gelagert wird und nicht-koaxial zu dem Zentriermittel des ersten Gehäuseteils (1) vorgesehen wird.

19. Verfahren nach einem der Ansprüche 16 bis 18,
**dadurch gekennzeichnet, dass**
das weitere Gehäuseteil (20)
- in einer Variante gehäusebildend für eine Stirnradstufe ist,
- in einer weiteren Variante ein Lager der Rotorwelle umfasst,
- in einer weiteren Variante zwei Lager umfasst zur Lagerung der eintreibenden Welle der vom ersten Gehäuseteil (1) umfassten Getriebestufe, wobei zwischen der Welle und der Rotorwelle des antreibenden Motors eine Kupplung vorgesehen ist.

20. Verfahren nach einem der Ansprüche 16 bis 19,
**dadurch gekennzeichnet, dass**
der Motor abtriebsseitig einen Quadratflansch aufweist oder einen Rundflansch.

21. Verfahren nach einem der Ansprüche 16 bis 20,
**dadurch gekennzeichnet, dass**
**die abtreibende Getriebestufe eine Winkelgetriebestufe ist und die eintreibende Getriebestufe eine Stirnradgetriebestufe ist.**

## Claims

1. Gearing, comprising at least a first housing part (1),
a discontinuous fitting element (3) being provided on the first housing part (1) as a first centring means for centring a further housing part (20) provided on the first housing part (1),
**characterised in that**
the first housing part (1) is designed as a die-cast part in such a manner that it is produced by die-casting using only one slide,
the discontinuous fitting element (3) comprises three or more arc section-shaped or circular arc section-shaped recesses or projecting regions of the first housing part (1),
the second, i.e. further, housing part (20) is designed as a die-cast part in such a manner that it is produced by die-casting using two slides having opposing drawing directions.

2. Gearing according to claim 1,
**characterised in that**
the further housing part (20) is connected to the first housing part (1) and the further housing part (20) is centred on the first centring means by means of a bearing outer ring serving as a centring means.

3. Gearing according to claim 1 or 2,
**characterised in that**
the first gear housing (1) forms a housing for an output gear step.

4. Gearing according to claim 1, 3 or 2,
**characterised in that**
the second gear housing (20) forms a housing for an input gear step or for a coupling part.

5. Gearing according to one of the preceding claims,
**characterised in that**
the fitting element (3) is discontinuous in the spatial region in which the slide is removed after the die-casting production process.

6. Gearing according to one of the preceding claims,
**characterised in that**
the discontinuous fitting element (3) comprises three or more arc section-shaped or circular arc section-shaped recesses or projecting regions of the housing part (1), said recesses or projecting regions being finished in an appropriate manner.

7. Gearing according to one of the preceding claims,
**characterised in that**
the discontinuous fitting element (3) comprises at least two or at least three centring regions arranged at a distance from one another.

8. Gearing according to one of the preceding claims,
**characterised in that**
the discontinuous fitting element (3) is circular.

9. Gearing according to one of the preceding claims,
**characterised in that**
the further housing part (20) is connected to the first housing part (1) and the further housing part (20) is an intermediate flange, the centring means of which is centred on the first centring means.

10. Gearing according to claim 9,
**characterised in that**
the centring means are projecting regions.

11. Gearing according to one of the preceding claims,
**characterised in that**
the further housing part (20) is connected to the first housing part (1) and the further housing part (20) is a second housing part centred on the first centring means by means of a bearing outer ring serving as a centring means, the bearing outer ring being provided pressed partially in a bearing receiver of the second housing part (20) and the bearing outer ring being brought into an operative connection with the centring means of the first housing part (1) by means of its region projecting from the second housing part (20) for centring purposes.

12. Gearing according to one of the preceding claims,
**characterised in that**
the second housing part (20) comprises a bearing receiver as the further housing part (20), the bearing receiver receiving a bearing the outer ring of which serves for centring on the centring means of the first housing part (1).

13. Gearing according to one of the preceding claims,
**characterised in that**
the input shaft and/or a bearing of the input shaft of the gear step embraced by the first gear housing (1) is arranged coaxially with the first centring means.

14. Gearing according to one of the preceding claims,
**characterised in that**
the input shaft and/or a bearing of the input shaft of the gear step embraced by the first gear housing (1) is arranged non-coaxially with the first centring means, the further housing part (20) being centred on the first centring means and the centring means of the further housing part (20) being arranged coaxially.

15. Gearing according to one of the preceding claims,
**characterised in that**,
on the input side, the second housing part (20) may
- be designed as a housing-forming housing part for a spur gear step, comprising bearing receivers for bearings of the output shaft of the spur gear step,
- be provided as a motor flange part that can be connected to the first gear housing (1), comprising a bearing receiver for receiving the bearing of the rotor shaft of the motor driving the gearing on the output side,
- be designed as a housing-forming housing part for a claw coupling part, comprising bearing receivers for bearings of the input shaft of the output gear step.

16. Method of producing gearing from a modular system,
the gearing comprising at least a first housing part (1),
a discontinuous fitting element (3) being provided on the first housing part (1) as a first centring means for centring a further housing part (20) provided on the first housing part (1),
**characterised in that**
the discontinuous fitting element (3) comprises three or more arc section-shaped or circular arc section-shaped recesses or projecting regions of the housing part (1),
the first housing part (1) is designed as a die-cast part produced by die-casting using one single slide,
the second housing part (20) is produced as a die-cast part by die-casting using two slides having opposing drawing directions.

17. Method according to claim 16,
**characterised in that**
the fitting element (3) is discontinuous in the spatial region in which the slide is removed after the die-casting production process.

18. Method according to one of claims 16 to 17,
**characterised in that**
the further housing part (20) is selected and designed in such a manner that either, in a first variant, the input shaft of the gear step embraced by the first housing part (1) is supported at least by one bearing in the further housing part (20) and is provided coaxially with the centring means of the first housing part (1) or,
in a second variant, the input shaft of the gear step embraced by the first housing part (1) is supported at least by one bearing in the further housing part (20) and is provided non-coaxially with the centring means of the first housing part (1).

19. Method according to one of claims 16 to 18,
**characterised in that**
the further housing part (20),
- in one variant, forms a housing for a spur gear step,
- in another variant, comprises a bearing of the rotor shaft,
- in another variant, comprises two bearings for supporting the input shaft of the gear step embraced by the first housing part (1), a coupling being provided between the shaft and the rotor shaft of the drive motor.

20. Method according to one of claims 16 to 19,
**characterised in that**
the motor has a square flange or a round flange on the output side.

21. Method according to one of claims 16 to 20,
**characterised in that**
the output gear step is a bevel gear step and the input gear step is a spur gear step.

## Revendications

1. Transmission comprenant au moins une première partie (1) de carter,
un tenon d'adaptation discontinu (3) étant prévu sur la première partie (1) du carter, en tant que premier moyen de centrage, en vue de centrer une autre partie (20) de carter prévue sur ladite première partie (1) du carter,
**caractérisée par le fait que**
la première partie (1) du carter est réalisée sous la forme d'une pièce moulée sous pression, de façon telle qu'elle soit produite par le procédé de moulage sous pression à l'aide d'un unique coulisseau,
ledit tenon d'adaptation discontinu (3) comprenant trois ou plus de trois creusures ou régions saillantes de la première partie (1) du carter, en forme de segments curvilignes ou de segments d'arc de cercle,
la seconde, c'est-à-dire l'autre partie (20) du carter étant réalisée sous la forme d'une pièce moulée sous pression, de façon telle qu'elle soit produite par le procédé de moulage sous pression au cours duquel sont utilisés deux coulisseaux dont les directions de traction sont orientées mutuellement à l'opposé.

2. Transmission selon la revendication 1,
**caractérisée par le fait que**
l'autre partie (20) du carter est reliée à la première partie (1) du carter, et ladite autre partie (20) du carter est centrée sur le premier moyen de centrage à l'aide d'une bague extérieure de montage constituant un moyen de centrage.

3. Transmission selon la revendication 1 ou 2,
**caractérisée par le fait que**
le premier carter (1) de ladite transmission forme un boîtier dévolu à un étage de transmission de sortie.

4. Transmission selon la revendication 1, 3 ou 2,
**caractérisée par le fait que**
le second carter (20) de ladite transmission forme un boîtier dévolu à un étage de transmission d'entrée, ou à une partie d'accouplement.

5. Transmission selon l'une des revendications précédentes,
**caractérisée par le fait que**
la discontinuité du tenon d'adaptation (3) est ménagée dans la zone de l'espace dans laquelle le coulisseau a été extrait à l'issue du procédé de fabrication par moulage sous pression.

6. Transmission selon l'une des revendications précédentes,
**caractérisée par le fait que**
le tenon d'adaptation discontinu (3) comprend trois ou plus de trois creusures ou régions saillantes de la partie (1) du carter, en forme de segments curvilignes ou de segments d'arc de cercle, qui sont soumises à un usinage de précision de manière correspondante.

7. Transmission selon l'une des revendications précédentes,
**caractérisée par le fait que**
le tenon d'adaptation discontinu (3) comprend au moins deux ou au moins trois zones de centrage situées à distance les unes des autres.

8. Transmission selon l'une des revendications précédentes,
**caractérisée par le fait que**
le tenon d'adaptation discontinu (3) est de réalisation circulaire.

9. Transmission selon l'une des revendications précédentes,
**caractérisée par le fait que**
l'autre partie (20) du carter est reliée à la première partie (1) du carter, et ladite autre partie (20) du carter est une bride intermédiaire dont le moyen de centrage est centré sur le premier moyen de centrage.

10. Transmission selon la revendication 9,
**caractérisée par le fait que**
les moyens de centrage sont des régions en saillie.

11. Transmission selon l'une des revendications précédentes,
**caractérisée par le fait que**
l'autre partie (20) du carter est reliée à la première partie (1) du carter, et ladite autre partie (20) du carter est une seconde partie de carter qui est centrée sur le premier moyen de centrage à l'aide d'une bague extérieure de montage constituant un moyen de centrage, sachant que la bague extérieure de montage est prévue avec emmanchement à force partiel dans un logement de montage de la seconde partie (20) du carter, et que ladite bague extérieure de montage est mise en liaison opérante avec le moyen de centrage de ladite première partie (1) du carter, par sa région saillant au-delà de ladite seconde partie (20) du carter, en vue du centrage.

12. Transmission selon l'une des revendications précédentes,
**caractérisée par le fait que**
la seconde partie (20) du carter, constituant une autre partie (20) de carter, est pourvue d'un logement de montage par lequel est reçu un palier dont la bague extérieure agit, avec effet de centrage, au niveau des moyens de centrage de la première partie (1) du carter.

13. Transmission selon l'une des revendications précédentes,
**caractérisée par le fait que**
l'arbre d'entrée, et/ou un palier de l'arbre d'entrée de l'étage de transmission intégré dans le premier carter (1) de ladite transmission, est (sont) disposé(s) coaxialement par rapport au premier moyen de centrage.

14. Transmission selon l'une des revendications précédentes,
**caractérisée par le fait que**
l'arbre d'entrée, et/ou un palier de l'arbre d'entrée de l'étage de transmission intégré dans le premier carter (1) de ladite transmission, n'est (ne sont) pas disposé(s) coaxialement par rapport au premier moyen de centrage, sachant que l'autre partie (20) du carter est centrée sur ledit premier moyen de centrage, et que le moyen de centrage de ladite autre partie (20) du carter occupe une position coaxiale.

15. Transmission selon l'une des revendications précédentes,
**caractérisée par le fait que**
sélectivement, côté entrée, la seconde partie (20) du carter
- est réalisée en tant que partie de carter formant un boîtier dévolu à un étage à pignons droits, sachant qu'elle comporte des logements de montage dédiés à des paliers de l'arbre de sortie dudit étage à pignons droits,
- est prévue en tant que partie de bridage d'un moteur qui peut être reliée à la première partie (1) du carter, et comporte un logement de montage conçu pour recevoir le palier de sortie de l'arbre rotorique du moteur entraînant ladite transmission,
- est réalisée en tant que partie de carter formant un boîtier dévolu à une partie d'accouplement par griffes, sachant qu'elle comporte des logements de montage dédiés à des paliers de l'arbre d'entrée de l'étage de sortie de ladite transmission.

16. Procédé de fabrication de transmissions à partir d'un ensemble modulaire, la transmission comprenant au moins une première partie (1) de carter,
un tenon d'adaptation discontinu (3) étant prévu sur la première partie (1) du carter, en tant que premier moyen de centrage, en vue de centrer une autre partie (20) de carter prévue sur ladite première partie (1) du carter,
**caractérisé par le fait que**
le tenon d'adaptation discontinu (3) comprend trois ou plus de trois creusures ou régions saillantes de la première partie (1) du carter, en forme de segments curvilignes ou de segments d'arc de cercle,
la première partie (1) du carter étant réalisée sous la forme d'une pièce moulée sous pression, en étant produite à l'aide d'un unique coulisseau au cours du procédé de moulage sous pression,
la seconde partie (20) du carter étant produite sous la forme d'une pièce moulée sous pression, par le procédé de moulage sous pression au cours duquel sont utilisés deux coulisseaux dont les directions de traction sont orientées mutuellement à l'opposé.

17. Procédé selon la revendication 16,
**caractérisé par le fait que**
la discontinuité du tenon d'adaptation (3) est ménagée dans la zone de l'espace dans laquelle le coulisseau est extrait à l'issue du procédé de fabrication par moulage sous pression.

18. Procédé selon l'une des revendications 16 à 17,
**caractérisé par le fait que**
l'autre partie (20) du carter est sélectionnée et configurée de façon telle que, sélectivement,
dans une première variante, l'arbre d'entrée de l'étage de transmission intégré dans la première partie (1) du carter soit monté au moins à l'aide d'un palier, dans ladite autre partie (20) du carter, et soit prévu coaxialement par rapport au moyen de centrage de ladite première partie (1) du carter ;
ou, dans une seconde variante, ledit arbre d'entrée de l'étage de transmission intégré dans ladite première partie (1) du carter soit monté au moins à l'aide d'un palier, dans ladite autre partie (20) du carter, et ne soit pas prévu coaxialement par rapport audit moyen de centrage de ladite première partie (1) du carter.

19. Procédé selon l'une des revendications 16 à 18,
**caractérisé par le fait que**
l'autre partie (20) du carter
- forme, dans une variante, un boîtier dévolu à un étage à pignons droits,
- comporte un palier de l'arbre rotorique, dans une autre variante,
- comprend, dans une autre variante, deux paliers dévolus au montage de l'arbre d'entrée de l'étage de transmission intégré dans la première partie (1) du carter, un accouplement étant prévu entre ledit arbre et l'arbre rotorique du moteur d'entraînement.

20. Procédé selon l'une des revendications 16 à 19,
**caractérisé par le fait que**
le moteur présente une bride rectangulaire ou une bride circulaire côté sortie.

21. Procédé selon l'une des revendications 16 à 20,
**caractérisé par le fait que**
l'étage de transmission de sortie est un étage d'engrenage à pignons coniques, et l'étage de transmission d'entrée est un étage d'engrenage à pignons droits.
